# EUROPEAN PATENT APPLICATION

(11) **EP 4 513 465 A1**
(43) Date of publication of application: **26.02.2025**
(21) Application number: 23306398.1
(22) Date of filing: 21.08.2023
(51) Int. Cl.: G08G 5/00, H04B 7/185, H04L 67/12, H04W 4/44, H04W 12/033, H04W 12/106

(54) **AIR GROUND COMMUNICATION METHOD FOR TRANSMITTING SAFETY MESSAGES OVER NON SAFETY INFRASTRUCTURE**

(71) Applicant: Rockwell Collins France SAS, 31701 Blagnac (FR)
(72) Inventor: TRINCAL, Frédéric, 31000 Toulouse (FR); PELLESCHI, Stéphane, 81500 Bannières (FR); LIVERNEAUX, Jérémie, 31140 Launaguet (FR); MAISON, Frédéric, 31870 Beaumont sur Lèze (FR); LEONARDON, Laurent, 31400 Toulouse (FR)
(74) Representative: Dehns

(57) **Abstract**

There is provided a method for transmitting safety-critical data from an aircraft control domain, ACD, router to a ground system via a Virtual Safety Radio, VSR, provided by a cross-router, X-router, interface between the ACD router and one or more non-safety communication domain routers, the method comprising: determining, by the VSR, that at least one non-safety media link of at least one non-safety communication medias of the one or more non-safety communication domain routers is available for conveying safety traffic from the ACD, responsive to the determination that at least one non-safety media link is available, receiving, by a communication stack of the ACD router, an application message; and sending, via the VSR, the application message to the ground system through the at least one available non-safety media link.

## Description

### FIELD

This invention relates generally to the field of avionics systems. More specifically, the present invention relates to an Air Ground Communication Method for Transmitting Safety Messages Over Non Safety Infrastructure.

### BACKGROUND

Modern developments in aircraft operations have resulted in new generation aircraft which generate up to four times the amount of Aircraft Communications Addressing and Reporting System (ACARS) data than their predecessors. This huge increase in data generated (and subsequent increase in reporting load) leads to cost and congestion increases that reduce the overall operational gain. In response, airlines are now looking for new ways to improve throughput and reduce such transmission costs.

Such problems have been anticipated in the Hyperconnected ATM concept in the EASA/FAA/Airbus/Boeing Communication white paper. ACARS over IP (AoIP) is an option that has recently been implemented for sending some of the aforementioned communications. AolP harnesses the advantages of ACARS while also utilizing the growing availability and decreasing cost of broadband cellular connectivity on the ground, and IP capable airborne radio communication via a satellite (Satcom) connectivity when airborne. However, such systems are unsecure and therefore unsuitable for transmitting safety messages.

Avionics communication systems can employ several network subsystems for various topologies, domains and information. For example, one subsystem may be associated with the Aircraft Control Domain (ACD), which may be configured to carry data such as flight critical parameters for the avionics system. For example, the ACD might carry data communications, navigation and surveillance (CNS) data for air traffic management (ATM), flight information and alerting, and direct Airline Operations Communications (AOC) that also affect aircraft safety, regularity and efficiency.

Another subsystem may be associated with the Airline Information Services Domain (AISD), which may be configured to carry data for the operation of the aircraft, but which does not have a bearing on the control of the aircraft. AlSO platforms may be used to support applications and content for either flight or cabin crew use. Another subsystem may be associated with the Passenger Information and Entertainment Services Domain (PIESD), which may be configured to carry data relating to passenger entertainment and network services. An avionics communication system may involve additional wiring and other network components to accommodate devices in the subsystems.

Taking the above example of AolP, whilst it might find use in the AISD or PIESD, it is unsuitable for use in the ACD. As such, current air/ground communication systems such as Communication Management Units (CMUs) typically use dedicated safety communication medias like high frequency (HF) or very high frequency (VHF) radios, or Satcom to exchange safety messages such as controller pilot data link communications (CPDLC), for example for clearance. These can be limited in bandwidth and also sometime coverage (e.g. VHF congestion in USA/EU).

As such, there exists a need to optimise air/ground communication.

### SUMMARY

According to a first aspect, there is provided a method for transmitting safety-critical data from an aircraft control domain, ACD, router to a ground system via a Virtual Safety Radio, VSR, provided by a cross-router, X-router, interface between the ACD router and one or more non-safety communication domain routers, the method comprising: determining, by the VSR, that at least one non-safety media link of at least one non-safety communication medias of the one or more non-safety communication domain routers is available for conveying safety traffic from the ACD; responsive to the determination that at least one non-safety media link is available, receiving, by a communication stack of the ACD router, an application message; and sending, via the VSR, the application message to the ground system through the at least one available non-safety media link.

Such a method allows for the use of non-safety communication medias for safety traffic, by interconnecting safety (e.g. ACD) and non-safety (e.g. AlSO) communication routers, by an X-Router (cross router) link. This results in optimized air/ground safety communication by making use of the non-dedicated high bandwidth infrastructure. This provides even further benefits in that, by diverting data that would otherwise have been transferred by dedicated safety means such as VHF, the traffic in these means can be reduced in congested areas. In addition, the air/ground communication cost may be drastically reduced. Further, aircraft safety and security may be ensured.

As would be appreciated, a VSR is a "virtual safety radio", from the perspective of the ACD router, provided by an x-router interface. The VSR emulates a safety radio such that the ACD sees, in addition to its traditional safety medias (such as the HF, VDL and/or SATCOM links 113), and through the same interface as a legacy radio so as to avoid router impact, the VSR, when there is a suitable AlSO link available. The ACD router can therefore send application messages through the VSR, as if it was the legacy radio, but the VSR may advantageously make use of non-safety communication medias in order to improve available bandwidth.

The step of determining that at least one non-safety media link is available for conveying safety traffic from the ACD may comprise active and/or passive link probing. This allows the availability and quality of service (QoS) provided by the non-safety links to be assessed, as well as direct information from the applicable medias to be obtained

The method may further comprise selecting, by the VSR, the most optimal of the at least one non-safety media link by a Multi-Link Engine, MLE, based on a media status of the media link and the link probing result, and wherein the application message is sent via the selected non-safety media link. In doing so, the optimal media to be used to send the data to the ground gateway may be selected.

The method may further comprise, prior to sending the application message, securing the application message using cryptography methods. In doing so, it is possible to ensure the confidentiality and integrity of the transfer to the ground.

Prior to sending the application message, metadata information may be added to the application message. This may be done by the MLE as above.

The method may comprise receiving, by the ground system, the application message. This completes a transfer from air to ground. A ground endpoint may then decapsulate, the application message, verify the application message, and forward, the decapsulated application message to a ground gateway of the ground system through a secure network. The ground endpoint may be, for example, a ground VPN Endpoint, and/or a Ground Tunnel Endpoint.

The step of forwarding the decapsulated application message to a ground gateway of the ground system through a secure network may comprise, reading metadata of the received application message regarding the desired destination ground gateway and, forwarding the application message to the desired destination ground gateway. This ensures deliverance of the message.

Th VSR may receive an acknowledgement from the ground system indicating that the application message has been received, and if no acknowledgement is received within a time threshold, then the VSR may report the link failure to the ACD router. The ACD router may then resend the message by a known safety media, so as to ensure delivery of the message within a necessary timespan.

The non-safety communication medias may be communication medias of one or more Airline Information Services Domain, AlSO, and/or Passenger Information and Entertainment Services Domain, PIESD.

According to a second aspect, there is provided a method for transmitting safety-critical data from a ground system to an aircraft control domain, ACD, router via a Virtual Safety Radio, VSR, provided by a cross-router, X-router, interface between the ACD router and one or more non-safety communication domain routers, the method comprising: determining, by a ground gateway of the ground system that at least one non-safety media link of the non-safety communication medias is available for conveying safety traffic to the ACD, responsive to the determination that at least one non-safety media link is available, receiving, by a communication stack of the ground system, an application message, sending the application message via the at least one available non-safety media link, receiving, by the VSR through the at least one available non-safety media link, the application message, and transmitting the application message from the VSR to the ACD router.

Similarly to the method of the first aspect, the second aspect allows for the use of non-safety communication medias for safety traffic, but this time for uplink communications. The VSR may receive the message via one of the non-safety medias, and transmit the message to the ACD router through a legacy radio interface, as if it were transmitted via safety means, over the X-router link. This results in optimized air/ground safety communication by making use of the non-dedicated high bandwidth infrastructure.

According to a third aspect, there is provided a system for air ground communication by transmitting safety messages over non safety infrastructure, the system comprising an aircraft control domain, ACD, router; a non-safety communication router in communication with at least one non-safety communication medias ; and a cross-router, X-router, interface configured to provide a Virtual Safety Radio, VSR; wherein the VSR is configured to: determine that at least one non-safety media link of the non-safety communication medias is available for conveying safety traffic from the ACD, send an application message that is received by a communication stack of the ACD router via the at least one available non-safety media link.

The non-safety communication router may be an Airline Information Services Domain, AlSO, router and/or a Passenger Information and Entertainment Services Domain, PIESD, router.

The X-router interface may be a partition of the ACD router, or a partition of the non-safety communication router.

The system may further comprise a ground gateway configured to receive the application message via the at least one available non-safety media link.

### BRIEF DESCRIPTION OF THE DRAWINGS

Certain examples of the disclosure will now be described, by way of example only, with reference to the accompanying drawings, in which:
Figure 1 is an architecture for transmitting safety-critical data via non-safety communication medias;
Figure 2 is a more detailed illustration of an ACD router connected to a VSR and to an AISD router which supports non-safety media interface;
Figure 3 shows a functional diagram of 1 to N secure data paths to ground gateway that are provided by a VSR;
Figure 4 shows an architecture of an AISD router which may support an X-router interface;
Figure 5 shows an example architecture of the ground system.

### DETAILED DESCRIPTION

Whilst the X-router concept discussed herein is mainly discussed with reference to existing networks which benefit from the X-router function such as ACARS and ATN/OSI, it is foreseen that the X-router interface described herein may be applied to ATN/IPS as well.

In addition, whilst interactions between an ACD router and AISD router are mainly discussed herein, it would be appreciated that the teachings could additionally or alternatively applied to another kind of domain router, such as a PIESD router. The routers may operate on any suitable system.

As outlined above, whilst there has recently been a move towards transferring ACARS data via alternative methods, there are still several sources of data such as ACD data that are transferred via dedicated safety means.

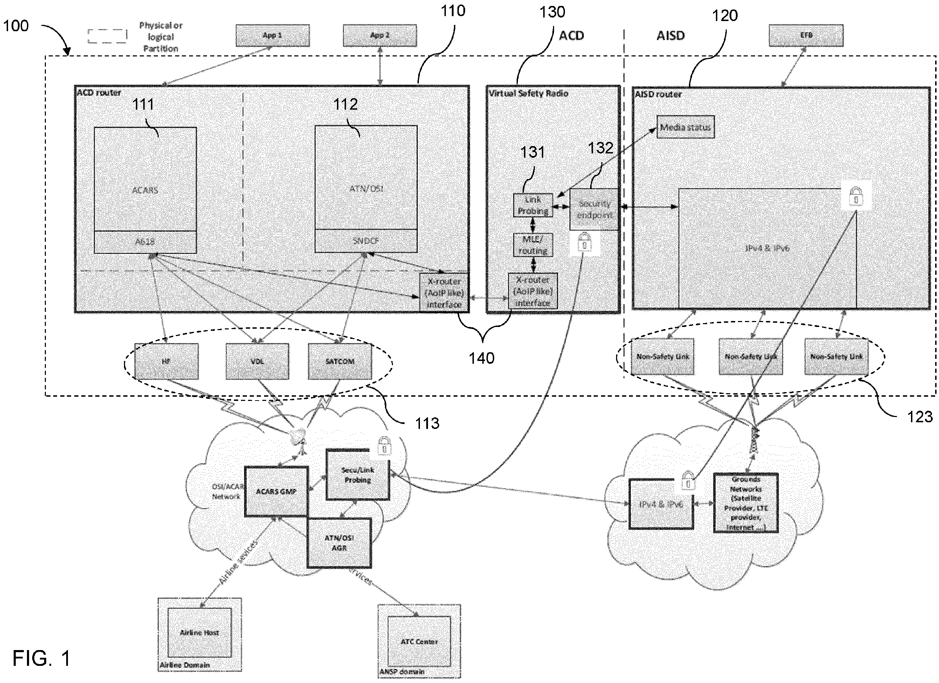

Figure 1 shows an architecture 100 which may allow for safety-critical data, e.g. from the ACD, to be transmitted via non-safety communication medias 123 (such as cellular 5G or cabin Satcom) for safety traffic by interconnecting safety (i.e. ACD) and non-safety (i.e. AlSO and/or PIESD) communication routers 110, 120. The architecture utilises a cross router (X-router) interface 140 to determine whether the non-safety routers 120 may be used to transmit safety traffic as a Virtual Safety Radio (VSR) 130.

As would be appreciated, the VSR 130 can be physical or logical (i.e. not necessarily dedicated hardware). In addition it may be a partition on either router, depending on the implementation details.

Such a system can mitigate any safety risks that would otherwise be associated by sending safety-critical data via non-safety means by monitoring the usage of the non-safety communication means for safety traffic. For example, if traffic sent by a non-safety means (e.g. any of the non-safety links 123) is not acknowledged by the receiving peer within a predefined time, the VSR may identify a link failure and alert the ACD router. The ACD router may then re-send the traffic using the safety communication means 113, in order to ensure delivery. In such a way, datalink traffic performance goals may be met.

Owing to their status as non-safety domains, the AISD/PEISD domains cannot be trusted. Therefore, the X-router system should be physically or logically isolated from the AISD. In addition, the ACD router may have connectivity with critical systems such as the flight management system (FMS) and ACMS (Aircraft Condition Monitoring System).

In the architecture 100, the X-router function may be seen as a subnetwork interface configured to provide the expected level of performance. For example, the X-router function may be seen as similar to an AolP architecture, where the network protocols such as ACARS A618 or ATN/OSI CLNP are applied between the aircraft and the ground without the need of a proxy.

As such, as can be seen in Figure 1, the architecture 100 shows a split of the same function where the X-router ACD feature (Link Probing, security endpoint...) hosted close to the AISD router 120, and therefore has a minimum impact for the ACD router 110.

In such an approach, the X-router subnetwork 140 within the ACD router 110 can establish its own secured air-ground link independently of the communication stacks above. Such an approach ensures the independence between the X-router security and the communication stacks which do not have security (such as ACARS and ATN/OSI).

The X-router interface may be provided for legacy architectures based on old generation systems like the CMU and the air traffic services unit (ATSU). Therefore, the X-router interface may be retrofitted onto existing architectures, in order to improve the throughput of safety information.

Such an architecture 100 aims at optimizing the usage of all the available air-ground communication medias (i.e. both safety medias 113, and non-safety medias 123) to convey all applications communication flows. In this way, the architecture 100 may send at least some of the ACARS and/or ATN/OSI traffic (i.e. safety traffic) via available AISD and/or PIESD available links. Such traffic can be downlinks and/or uplinks, as the service providers may also use the available AISD/PIESD links to send uplinks to ACD applications.

The architecture enables the ACD router to select which kind of ACARS and/or ATN/OSI traffic it will convey via the AISD/PIESD.

For example, for ATN/OSI traffic, the architecture may convey Sub Network Dependent Convergence Functions (SNDCF) frames over the AISD network to the ground systems. On the ground side, the SNDCF traffic has to be conveyed through the ATN/OSI air-ground routers. A similar concept may apply to ATN/IPS traffic. For example, A618 blocks (up to 220 Bytes) may be conveyed over the AISD network to the ground systems. On the ground side, the A618 traffic may then be conveyed through the ground ACARS processor.

The safety traffic needs to comply to Required Communication Performance (RCP) requirements and Required Surveillance Performance (RSP) requirements, notably defined in the RTCA DO-350A/EUROCAE ED-228A. Notably, as part of the requirements, there is a need to comply with latency requirements to be below a maximum round trip time for an application transaction.

As described above, with the suggested X-router interface, the ACD router has the opportunity to use the AISD links to complete the application transaction in a short timeframe owing to the performance of commercial links and, in case the transaction is not properly completed, to have remaining time to perform the transaction thanks to safety links.

By utilising such an X-router arrangement, for example in an architecture similar to the architecture 100 seen in Figure 1, it is possible to transmit safety information through non-safety channels. Specifically, by providing the X-router function at the boundary between the ACD and AISD, and it is possible to meet ACD requirements, whilst utilising the AISD channels. In general, such an X-router interface allows for the AISD (or PIESD) router to report its media detailed status to the ACD router.

Firstly the X-router interface may determine that, at least one AISD link is available for conveying ACD traffic, and is seen as a Virtual Safety Radio (VSR). In this way, the X-router interface provides a virtual "safety radio", from the perspective of the ACD router. The VSR emulates a safety radio such that the ACD sees, in addition to its traditional safety medias (such as the HF, VDL and/or SATCOM links 113), and through the same interface as a legacy radio so as to avoid router impact, the VSR, when there is a suitable AlSO link available.

When it is determined that there is a suitable AlSO link, the application message may then then be received by the ACD communication stack, and over the X-router link the ACD router then uses the VSR (i.e. the available AISD link) to send the message.

As described above, and in order to ensure safety, if the VSR sees that the message is not properly acknowledged by the ground end system, the ACD router may alternatively use a known ACD link to send the message (within any latency requirements).

However, in order to maintain isolation, the X-router interface may not allow for data to be sent between applications flows and may additionally ensure that data received from an air-ground link is not sent back over another air-ground link.

Accordingly, such an X-router interface may offer the Hyperconnected ATM for different types of safety traffic, such as FANS 1/A: ACARS-based traffic, as well as ATN B1/B2: ATN/OSI based traffic or later on ATN/IPS-based traffic. In this way, the X-router may be designed to operate with ACARS/OSI ACD routers, as well as ACARS/IPS ACD routers.

However, certain security objective still must be met, when sending safety messages over non-safety architecture. For example, the X-router interface may be configured to authenticate all flows from untrusted areas (such as the AISD domain and/or the ground network) wanting to communicate with it so as to ensure that the X-router can authenticate the data.

The X-router interface can secure the communication between it and the external sources, so as to ensure the data integrity when interacting with outside of the X-router.

The X-router interface, in addition, may ensure a secure data storage so as to ensure protection of sensitive data (e.g. utilising keys ...) at rest.

In addition, the X-router may validate the data from all inputs, may be implemented in segregated area (physically or logically), and may be continually monitored to detect problems in real time.

As part of the X-router architecture, the ACD router 110 needs to rely on valid information regarding the link availability and performance. However, the ACD router cannot rely completely on the information provided by the AISD router 120 regarding link status. For example, if the integrity of the information provided regarding the non-safety link status cannot be guaranteed, then there is a risk that some links might be declared as fully operational whereas they are not available. In such a case, the ACD router may try to use these links, when they are actually unsuitable for use.

As such, a link probing function is defined for the Virtual Safety Radio 130 to assess the availability and quality of service (QoS) provided by the non-safety links. With regards to safety air-ground links, it is generally assumed that the safety links status can be reliable and, on legacy air-ground links such as VDL Mode 2, there is no need for active probing.

The VSR 130 may probe links in 2 different ways:
Active probing, which relies on specific messages being sent on the link for the probing.

Passive probing, which relies on exchanges already done on the link (without sending specific messages).

These active and passive probing methods can be combined so as to provide maximum efficiency and detect any link quality degradation in proper time.

In the case of the active probing, the intent is to send a message on the link and expect an answer from the ground to determine availability, round-trip time etc. The active probing protocol may be done above User Datagram Protocol (UDP) and IPv6/IPv4 (which is the communication network that may be used by the AISD router).

Such active probing needs to be done between trusted domains. As the AISD domain is considered as not-trusted, the link probing is done between the VSR 130 and the ground trusted domain (i.e. the ATN domain).

In addition, the active probing needs to ensure the integrity of the result, and therefore must rely on security protocol provided by the X-router interface. As such, link probing may be an active request/response/response protocol embedded in the secured connection. There may be one secured session inside the X-router feature for all the AISD links. As such, the easiest way to do active probing may be to have a probing application that will be using the secured session. The app may be as simple as a 3 steps Air request/Ground response/Air response protocol initiated by the aircraft with a timestamp to measure the RTT of the specific link, using, for example, the following parameters:
- Link ID,
- Timestamp.

In some cases, the timestamp provided by the aircraft is not reliable as there may be other sources than the GPS clock. To mitigate such issues, active probing may utilise 3 steps. The linkID is properly defined between the aircraft and the ground end-point to identify precisely which link is tested.

The passive probing relies on existing protocol, owing to protocol analysis. Nevertheless this is dependent on the underlying protocols which can be connectionless and there is no way to measure the timing between a request and an answer. The passive probing can rely on transport protocols (such as COTP4), control plane protocols (IDRP, routing...) but also on E2E protocols used at the application traffic being sent over the secured session. For example, is a protocol with acknowledgements which can be easily analysed to detect link quality degradation.

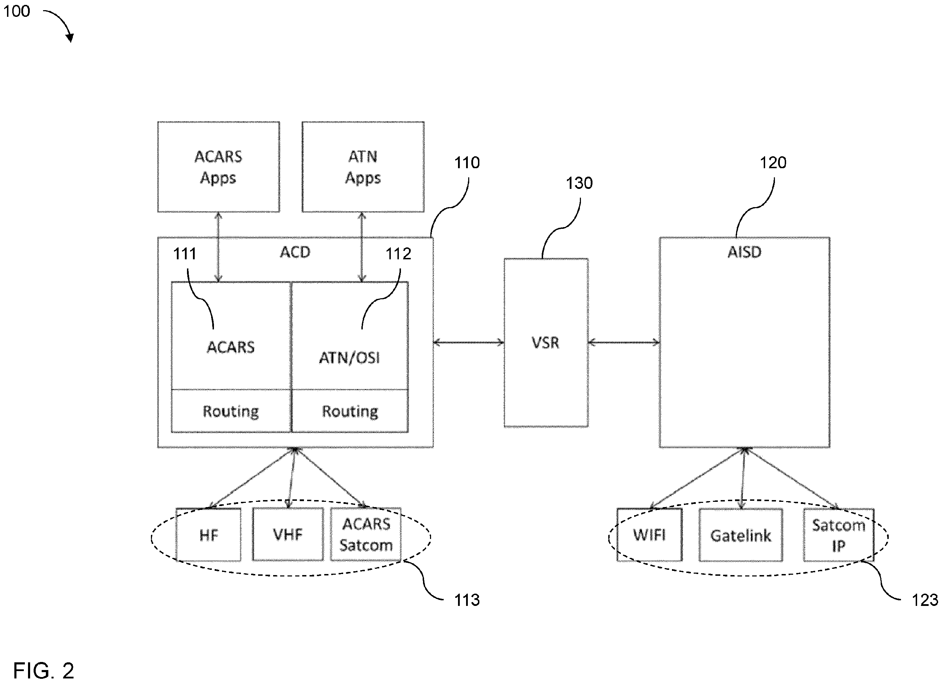

Figure 2 illustrates the architecture 100, and particularly the ACD router, in more detail. The ACARS Router 111 and ATN/OSI 112 router may utilise legacy ARINC protocols/ATN/OSI protocols.

The VSR 130 may be seen as a new medium in addition to the SATCOM or the HF link, connected via an A429 link, owing to the routing policy defined on the ACD. On VSR 130, the decision to go to a specific link 123 depends the availability and the quality of service on that link, for example, as determined by link probing described above.

Whilst not illustrated, the Virtual Safety Radio (VSR) is connected either on an HF or SATCOM link connection as described in Figure 2. The ATN/OSI partition is dedicated to air traffic control (ATC) messages that are received/sent from/to the ground. The medium used for ATC messages may be VHF or SATCOM.

A SATCOM link may be emulated by the VSR to communicate with the ground. The sat dispatcher analyses the message from ground and sends it to the OSI stack and it sends the message for the OSI stack before sending it to the SATCOM before sending to the ground.

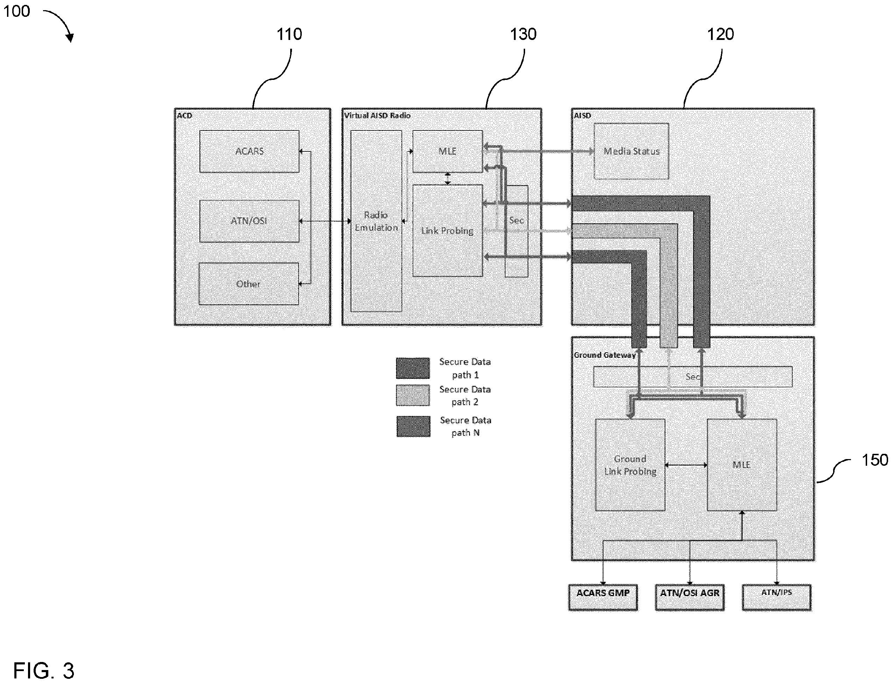

Figure 3 shows a functional diagram of 1 to N secure data paths that are provided by the VSR 130. Essentially, the VSR is a component of the system that provides reliable data paths for the ACD to send messages to the ground. The VSR partition may be a DAL D or DAL C component which hosts the link probing feature (active and/or passive), the Link Security feature, the radio emulation and optionally a Multi-Link Engine feature.

As would be appreciated, the VSR may be hosted either on an AISD partition, on an ACD partition or even on a dedicated LRU. Nevertheless, when the VSR component is a partition being hosted by the AISD or ACD partition, a strong segregation between each other must be enforced (i.e. the function of the VSR strongly isolated from the other domains).

The function of the VSR may act as a legacy (i.e. safety) radio (HF or Satcom) from the ACD point of view, thereby allowing the VSR to convey ACARS, ATN/OSI traffic etc., all of which are information that typically is only distributed via safety means.

As outlined above, link probing allows the VSR to obtain reliable information concerning the AISD link availability, while a Multi-Link Engine (MLE) can consolidate the link probing result with the AISD Media Status (media quality, theorical bandwidth etc.). The media status traffic between the AISD router (i.e. the non-trusted domain) and the VSR component (the X-Router interface) can be strongly isolated so as to avoid attack path between both domains. The Radio Emulation of the VSR may then interact with the ACD domain so as to simulate the radio interface (e.g. the HF, Satcom etc. of the ACD).

When hosted on the VSR, the MLE oversees routing the ACD to ground messages to the correct AISD link. The MLE may add metadata information when sending the messages to the ground gateway so that the ground gateway is able to route the message to the right destination.

The VSR secures the traffic sent from the ACD to the AISD. The VSR ensures the integrity and authenticity of the data sent to/received from the AISD domain before forwarding the data to the ACD domain. All traffic may be sanitized with input validation filtering.

In addition, in performing the security features, the VSR may also encrypt the data to ensure the confidentiality and integrity of the transfer to the ground. The secure message created by the VSR allows for a reliable source of information between the VSR and the Ground Gateway, which are both on a trusted network.

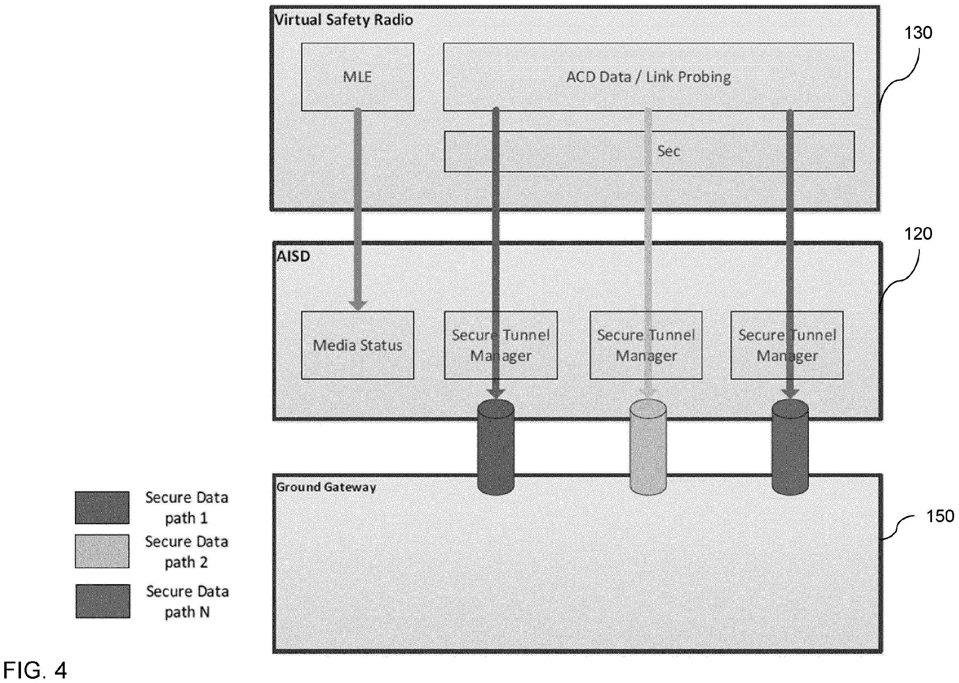

Figure 4 shows an architecture of the AISD router 120 which may support the X-router interface.

As above, the AISD may be configured to share the media status (i.e. information such as media quality, theorical bandwidth, etc.), which may be used by the MLE to determine the ideal route(s) to be used to the ground.

Further, the AISD can provide one or more secure data paths. In this way, the AISD may provide several secure tunnels to send/receive communication to/from the ground. Each tunnel is configured to utilise a specific AISD media, thereby allowing the MLE to select the optimal media to be used to send the data to the ground gateway. Each tunnel within the AISD is segregated so that the ACD traffic is sent to the ground using the expected media.

In addition, and for security, the AISD may secure the AISD/ground communication using tunnelling/data encapsulation technologies such as IPSEC. Such tunnelling may ensure the authentication, integrity and confidentiality of the data exchange between the AISD and the Ground VPN EndPoint.

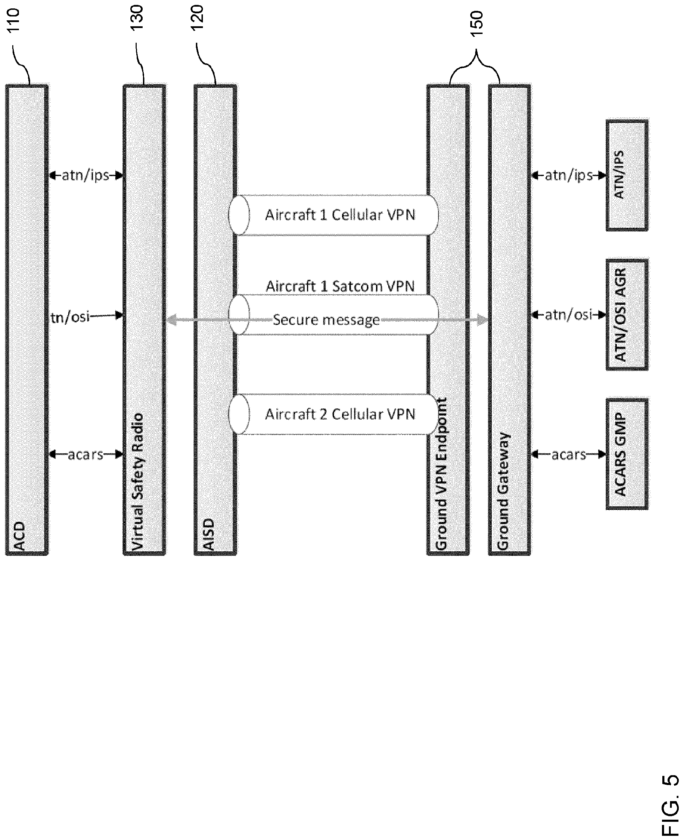

Figure 5 shows an example architecture of the ground system. The Ground system is generally composed by two parts:
- The Ground Tunnel Endpoint/Ground VPN Endpoint: the end point of the AISD tunnelling.
- The Ground Gateway: This is the end of the VSR secure message.

The Ground Tunnel Endpoint receives the AISD Data. It decapsulates the traffic and may forward the traffic to the Ground Gateway through a secure network. The endpoint provides an API allowing the Ground Gateway to send an uplink message to a specific aircraft through a specific media. In addition, the endpoint maintains a list of connected aircraft/media, and can report these statuses to the Ground Gateway, so that the Ground Gateway is able to route uplink messages through the correct media of the AISD.

For downlink messages, the Ground Gateway may check the integrity/authenticity of the received message. Then the metadata associated to the secure message are used to route the received traffic to the ACARS or ATN/OSI or other protocol endpoints.

The Ground Gateway will apply similar management as Airborne equipment for AISD link probing by performing both Active and Passive link probing. This will allow the Ground Gateway to make media selection for uplink messages based on actual link QoS information. As can be seen in Figures 3 and 5, the ground gateway 150 contains similar management functions as the VSR 130.

For Active probing, the Ground Gateway will respond to Air Link probing requests sent by the VSR. The final VSR response to Ground feedback will allow the ground gateway to determine the round trip delay from its side as Air and Ground clocks may not be aligned (3 steps active link probing).

For passive probing, the Ground Gateway will collect Ground/Air communication message/acknowledgement statistics to monitor the various communication links with the VSR.

As would be appreciated, the systems and methods herein allow for the use of non-safety communication medias for safety traffic, by interconnecting safety (e.g. ACD) and non-safety (e.g. AlSO) communication routers. This results in optimized air/ground safety communication by making use of the non-dedicated high bandwidth infrastructure. This provides even further benefits in that, by diverting data that would otherwise have been transferred by dedicated safety means such as VHF, the traffic in these means can be reduced in congested areas. In addition, the air/ground communication cost may be drastically reduced. Further, aircraft safety and security may be ensured.

It will be appreciated by those skilled in the art that the disclosure has been illustrated by describing one or more specific examples, but is not limited to these examples; many variations and modifications are possible within the scope of the accompanying claims.

## Claims

1. A method for transmitting safety-critical data from an aircraft control domain, ACD, router to a ground system via a Virtual Safety Radio, VSR, provided by a cross-router, X-router, interface between the ACD router and one or more non-safety communication domain routers, the method comprising:
determining, by the VSR, that at least one non-safety media link of at least one non-safety communication medias of the one or more non-safety communication domain routers is available for conveying safety traffic from the ACD,
responsive to the determination that at least one non-safety media link is available, receiving, by a communication stack of the ACD router, an application message, and
sending, via the VSR, the application message to the ground system through the at least one available non-safety media link.

2. The method of claim 1, wherein the determining that at least one non-safety media link is available for conveying safety traffic from the ACD comprises active and/or passive link probing.

3. The method of claim 2, comprising
selecting, by the VSR, the most optimal of the at least one non-safety media link by a Multi-Link Engine, MLE, based on a media status of the media link and the link probing result, and wherein the application message is sent via the selected non-safety media link.

4. The method of any preceding claim, comprising
prior to sending the application message, securing the application message using cryptography methods.

5. The method of any preceding claim, comprising
prior to sending the application message, adding metadata information to the application message.

6. The method of any preceding claim, comprising
receiving, by the ground system, the application message.

7. The method of claim 6, comprising
decapsulating, the application message,
verifying the application message, and
forwarding, by the ground endpoint, the decapsulated application message to a ground gateway of the ground system through a secure network.

8. The method of claim 7, wherein the step of forwarding the decapsulated application message to a ground gateway of the ground system through a secure network comprises, reading metadata of the received application message regarding the desired destination ground gateway and, forwarding the application message to the desired destination ground gateway.

9. The method of any of claims 6 to 8, comprising
receiving, by the VSR, an acknowledgement from the ground system indicating that the application message has been received, and if no acknowledgement is received within a time threshold, then reporting the link failure to the ACD router.

10. The method of any preceding claim, wherein the non-safety communication medias are communication medias of one or more Airline Information Services Domain, AlSO, and/or Passenger Information and Entertainment Services Domain, PIESD.

11. A method for transmitting safety-critical data from a ground system to an aircraft control domain, ACD, router via a Virtual Safety Radio, VSR, provided by a cross-router, X-router, interface between the ACD router and one or more non-safety communication domain routers, the method comprising:
determining, by a ground gateway of the ground system that at least one non-safety media link of the non-safety communication medias is available for conveying safety traffic to the ACD,
responsive to the determination that at least one non-safety media link is available, receiving, by a communication stack of the ground system, an application message,
sending the application message via the at least one available non-safety media link,
receiving, by the VSR through the at least one available non-safety media link, the application message, and
transmitting the application message from the VSR to the ACD router.

12. A system for air ground communication by transmitting safety messages over non safety infrastructure, the system comprising
an aircraft control domain, ACD, router;
a non-safety communication router in communication with at least one non-safety communication medias ; and
a cross-router, X-router, interface configured to provide a Virtual Safety Radio, VSR; wherein the VSR is configured to:
determine that at least one non-safety media link of the non-safety communication medias is available for conveying safety traffic from the ACD,
send an application message that is received by a communication stack of the ACD router via the at least one available non-safety media link.

13. The system of claim 12, wherein the non-safety communication router is an Airline Information Services Domain, AlSO, router and/or a Passenger Information and Entertainment Services Domain, PIESD, router.

14. The system of claim 12 or 13, wherein the X-router interface is a partition of the ACD router, a partition of the non-safety communication router, or an independent unit.

15. The system of any of claims 12 to 14, further comprising a ground gateway configured to receive the application message via the at least one available non-safety media link.
